(19) **Europäisches Patentamt / European Patent Office / Office européen des brevets**

(11) **EP 4 679 833 A1**

(12) **EUROPEAN PATENT APPLICATION**
published in accordance with Art. 153(4) EPC

(43) Date of publication:
**14.01.2026 Bulletin 2026/03**

(21) Application number: **24787929.9**

(22) Date of filing: **28.03.2024**

(51) International Patent Classification (IPC):
**H04N 19/96** (2014.01)    **H04N 19/176** (2014.01)
**H04N 19/147** (2014.01)

(86) International application number:
**PCT/CN2024/084562**

(87) International publication number:
**WO 2024/212823 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.04.2023  CN 202310382784**

(71) Applicant: **BIGO TECHNOLOGY PTE. LTD.**
**Singapore 117440 (SG)**

(72) Inventor: **ZHANG, Kaiming**
**Beijing 100102 (CN)**

(74) Representative: **Yang, Shu**
**Withers & Rogers LLP**
**2 London Bridge**
**London SE1 9RA (GB)**

(54) **SAMPLE ADAPTIVE OFFSET METHOD, APPARATUS AND DEVICE, STORAGE MEDIUM, AND PRODUCT**

(57)    The present application provides a sample adaptive offset method, apparatus and device, a storage medium, and a product. The method comprises: acquiring coding reference information of a coding tree unit and a corresponding video scene; according to a coding frame type and offset mode information, determining whether to skip sample offset of the coding tree unit; in response to a determination result of skipping the sample offset, skipping the sample offset of the coding tree unit; in response to a determination result of not skipping the sample offset, determining, according to a coding sub-block type and the video scene, offset modes to be traversed; and performing sample offset processing on the coding tree unit on the basis of the offset modes to be traversed. According to the present application, whether the offset can be skipped or not is preliminarily determined on the basis of the coding frame type and the offset mode information, to achieve the preliminary acceleration effect; the offset mode is simplified from the perspectives of internal coding information of the coding tree unit and content features, so that under the condition of slightly sacrificing the offset accuracy, the calculation overhead is saved, and the offset processing speed is efficiently improved.

FIG. 1

## Description

The present disclosure claims priority to Chinese Patent Application No. 202310382784.8, filed on April 11, 2023, the disclosure of which is herein incorporated by reference in its entirety.

## TECHNICAL FIELD

Embodiments of the present disclosure relate to the field of video coding technologies, and in particular, relate to a sample adaptive compensation method, apparatus, and device, a storage medium, and a product.

## BACKGROUND

Compared with the most widely used advanced video coding standards at present, the new generation of high-efficiency video coding standards nearly doubles the compression rate by introducing a series of high-efficiency coding tools. However, considerable compression benefits inevitably bring high calculation overheads, especially for coding tools represented by sample adaptive compensation, which causes significant computational load on video coding on mobile terminals. The sample adaptive compensation is mainly generated to solve the ringing artifacts. By traversing all pixel points, classification and compensation are performed based on the relationship between each pixel point and its surrounding pixel points, so as to correct issues such as convex corners and concave corners in specific directions. It can be learned that the sample adaptive compensation is a pixel-level distortion compensation technology, and also means high coding overheads. On a mobile device with poor computing power, a post-processing process such as sample adaptive compensation is serialized with a coding process, which will seriously affect the coding progress, become the main bottleneck in video coding speed on the mobile terminal, and easily cause a series of problems, such as video frame loss and stuttering. Even on a mobile terminal with good computing power, a separate thread may be started to perform a post-processing process, such as sample adaptive compensation, but the absolute calculation amount is not reduced, which still causes unnecessary power consumption, heat generation, and the like.

To reduce the absolute calculation amount of the sample adaptive compensation, in the related art, two schemes of overall skipping and mode simplification of the sample adaptive compensation are mainly adopted. For the overall skipping, it is mainly determined based on the texture information of the current block or coding reference information, such as an existing coding unit (CU) mode. In the case that the current block is a large-area flat block, the benefit of performing the sample adaptive compensation is not large, and the relevant calculation of the sample adaptive compensation can be directly skipped. In the related art, the determination condition for the overall skipping is relatively rough; a good acceleration effect can be achieved on a large block with dimensions of $64 \times 64$, but small blocks of $32 \times 32$ or $16 \times 16$ are easily missed or mistakenly selected, leading to a poor acceleration effect. For the mode simplification, the calculation amount is mainly reduced in terms of precision. In the pixel traversal process of the sample adaptive compensation, traversal categories, rate-distortion optimization, and other processes are simplified. In the related art, a mainstream encoder has simplified a rate-distortion optimization process in the sample adaptive compensation, estimated distortion by means of formula fitting, and replaced actual encoded bits with empirical values, such that the calculation overhead in the mode is reduced. Therefore, by simplifying the RDO processes of all modes, an acceleration effect is not obvious. In addition, in the related art, the number of boundary compensation modes is halved directly, without considering the content features of the coding frames, which easily causes a loss in compensation precision.

## SUMMARY

Embodiments of the present disclosure provide a sample adaptive compensation method, apparatus, and device, a storage medium, and a product, which solve the problems of poor acceleration effect caused by rough determination conditions for overall skipping and serious loss in compensation precision caused by the fact that a mode simplification strategy does not combine content features and a video scene, thereby effectively combining the internal coding information of a coding tree unit and the content features of an coding frame, simplifying the compensation mode in the case that compensation precision is slightly compromised, saving calculation overhead, and efficiently improving the compensation processing speed.

In a first aspect, the embodiments of the present disclosure provide a sample adaptive compensation method. The method includes:

acquiring coding reference information of a coding tree unit and a video scene corresponding to the coding tree unit, wherein the coding reference information includes a coding frame type, a coding sub-block type, and compensation mode information of adjacent coding tree units;

determining whether to skip sample compensation of the coding tree unit based on the coding frame type and the compensation mode information;

skipping, in response to skipping the sample compensation, the sample compensation of the coding tree unit;

determining, in response to not skipping the sample compensation, to-be-traversed compensation modes based on the coding sub-block type and the video scene; and

performing the sample compensation on the coding tree unit based on the to-be-traversed compensation modes, a number of the to-be-traversed compensation modes being less than a number of the preset compensation modes.

In a second aspect, the embodiments of the present disclosure further provide a sample adaptive compensation apparatus. The apparatus includes:

an acquisition module, configured to acquire coding reference information of a coding tree unit and a video scene corresponding to the coding tree unit, wherein the coding reference information includes a coding frame type, a coding sub-block type, and compensation mode information of adjacent coding tree units;
a determination module, configured to determine whether to skip sample compensation of the coding tree unit based on the coding frame type and the compensation mode information;
an overall skip module, configured to skip, in response to skipping the sample compensation, the sample compensation of the coding tree unit;
a mode simplification module, configured to determine, in response to not skipping the sample compensation, the to-be-traversed compensation modes based on the coding sub-block type and the video scene; and
a sample compensation module, configured to perform the sample compensation on the coding tree unit based on the to-be-traversed compensation modes, a number of the to-be-traversed compensation modes being less than a number of the preset compensation modes.

In a third aspect, the embodiments of the present disclosure further provide a sample adaptive compensation device. The device includes:

one or more processors; and
a storage apparatus, configured to store one or more programs.

The one or more programs, when run by the one or more processors, cause the one or more processors to perform the sample adaptive compensation method as defined in the embodiments of the present disclosure.

In a fourth aspect, the embodiments of the present disclosure further provide a non-transitory storage medium storing one or more computer-executable instructions. The one or more computer-executable instructions, when executed by a computer processor, cause the computer processor to perform the sample adaptive compensation method as defined in the embodiments of the present disclosure.

In a fifth aspect, the embodiments of the present disclosure further provide a computer program product.

The computer program product includes one or more computer programs stored in a computer-readable storage medium, wherein the one or more computer programs, when read from the computer-readable storage medium and run by at least one processor of a device, cause the device to perform the sample adaptive compensation method as defined in the embodiments of the present disclosure.

It can be seen from the above that the coding reference information of a coding tree unit and a corresponding video scene are acquired, and then whether to skip the sample compensation of the coding tree unit is determined based on a coding frame type and compensation mode information in the coding reference information; or in response to skipping the sample compensation, the sample compensation of the coding tree unit is skipped; or in response to not skipping the sample compensation, to-be-traversed compensation modes are determined based on the coding sub-block type in the coding reference information and the video scene; finally, sample compensation is performed on the coding tree unit based on the to-be-traversed compensation modes, where the number of to-be-traversed compensation modes is less than the number of the preset compensation modes. With the above technical means, the importance of the current coding tree unit is known based on the coding frame type, and the necessity of compensation for the current coding tree unit is obtained based on the compensation mode information through the compensation situation of adjacent coding tree units, so as to preliminarily determine whether the compensation is skipped and achieve a preliminary acceleration effect. In the case that the compensation is not skipped, the compensation mode is further simplified based on the coding sub-block type and the video scene from the perspectives of the internal coding information of the coding tree unit and the content features of the coding frame; on the premise of slightly compromising the compensation precision, the calculation overhead is saved, and the compensation processing speed is efficiently improved.

**BRIEF DESCRIPTION OF DRAWINGS**

FIG. 1 is a flowchart of a sample adaptive compensation method according to some embodiments of the present disclosure;
FIG. 2 is a flowchart of a method for determining whether to skip sample compensation of a coding tree unit according to some embodiments of the present disclosure;
FIG. 3 is a flowchart of a method for determining to-be-traversed compensation modes according to some embodiments of the present disclosure;
FIG. 4 is a flowchart of another method for determining to-be-traversed compensation modes according to some embodiments of the present disclosure;
FIG. 5 is a flowchart of a method for performing sample compensation on a coding tree unit according to some embodiments of the present disclosure;
FIG. 6 is a flowchart of another sample adaptive compensation method according to some embodiments of the present disclosure;
FIG. 7 is a structural block diagram of a sample adaptive compensation apparatus according to some embodiments of the present disclosure; and
FIG. 8 is a schematic structural diagram of a sample adaptive compensation device according to some embodiments of the present disclosure.

## DETAILED DESCRIPTION

Embodiments of the present disclosure will be further described in detail below with reference to the accompanying drawings and the embodiments. It should be understood that the specific embodiments described herein are merely used for explaining the embodiments of the present disclosure and are not limitations to the embodiments of the present disclosure. In addition, it shall be noted that for convenience of description, only the portions associated with the embodiments of the present disclosure, rather than the entire structure, are illustrated in the drawings.

The terms "first", "second", and the like in the specification and claims of the present disclosure are used to distinguish similar objects, and are not intended to describe a specific order or sequence. It should be understood that the data so used is interchangeable under appropriate circumstances, such that the embodiments of the present disclosure are capable of implementation in other orders than those illustrated or described herein. In addition, objects distinguished by "first", "second", and the like are usually of the same type, and the number of objects is not limited. For example, there may be one or more first objects. In addition, in the specification and claims, "and/or" indicates at least one of objects connected by "and/or", and the character "/" generally indicates an "or" relationship between the associated objects before and after the "/".

The sample adaptive compensation method according to the embodiments of the present disclosure belongs to an intermediate link of a video coding pipeline. The video coding pipeline includes stages such as frame collection, PTQ loop, compensation, and pending output bitstream. In the case that a user initiates a video coding requirement through a video transmitting end, the foregoing video coding pipeline is triggered. Specific application scenes may include a video conference, a video call, indoor live streaming, outdoor live streaming, and the like. Taking indoor live streaming as an example, a video transmitting end invokes a camera of a terminal device to collect pictures, and inputs the collected video frames into a PTQ loop frame by frame for coding to obtain coding frames. Then, sample compensation processing is performed by using the sample adaptive compensation method according to the embodiments of the present disclosure. Finally, the compensated coding frames are reversely sent back to the PTQ loop as the prediction process for the next frame on the one hand, and on the other hand, continue with entropy coding to obtain bitstreams to be transmitted. Video receiving ends distributed at different locations perform video decoding and playback after receiving code streams through network transmission. The foregoing several application scenes are merely exemplary and explanatory. In actual application, the sample adaptive compensation method may be further used in video coding in other scenes, which is not limited in the embodiments of the present disclosure. The present disclosure aims to provide a sample adaptive compensation method, which can effectively combine content features of a coding frame and a video scene, simplify the compensation mode in the case that compensation precision is slightly compromised, save calculation overhead, and efficiently improve the compensation processing speed.

In the sample adaptive compensation method according to the embodiments of the present disclosure, each step is applicable to a computer device. The computer device refers to any electronic device with data calculation, processing, and storage capabilities, such as a mobile phone, a personal computer (PC), a tablet computer, and other terminal devices, or a device such as a server, which is not limited in the embodiments of the present disclosure.

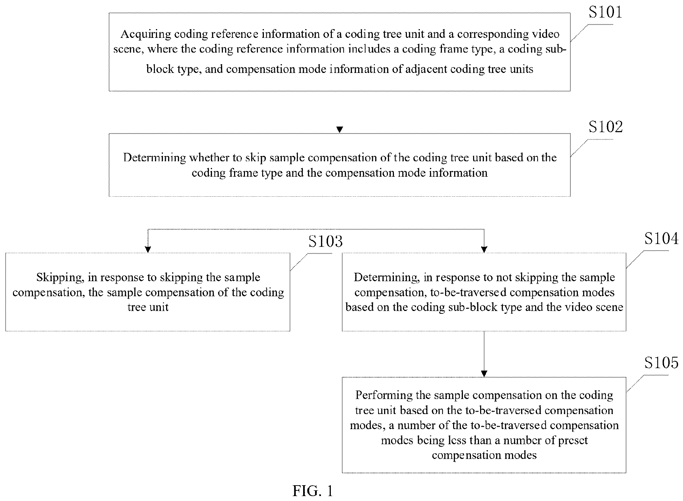

FIG. 1 is a flowchart of a sample adaptive compensation method according to some embodiments of the present disclosure. The method specifically includes the following steps.

In S101, the coding reference information of a coding tree unit and a video scene corresponding to the coding tree unit are acquired, where the coding reference information includes a coding frame type, a coding sub-block type, and the compensation mode information of adjacent coding tree units.

The video scene is classified based on the picture content of a video, the geographical region of the video, the unidirectional and directional transmission of the video, and the like. For example, the video scene includes a video conference, a video call, indoor live streaming, and outdoor live streaming. The coding reference information is coding information obtained after a video frame is processed by a PTQ loop and the compensation result of another coding tree unit in a sample adaptive compensation process. The coding frame type is classified into an I-frame, a P-frame, and a B-frame. The current coding frame is further partitioned into a plurality of coding tree unit rows, each coding tree unit row includes a plurality of coding tree units, and each coding tree unit is partitioned into coding sub-blocks of different dimensions based on different partition depths. Taking the coding tree unit of $64 \times 64$ as an example, it may be further partitioned into coding sub-blocks of $32 \times$

32, 16 × 16, 8 × 8, and 4 × 4, and the coding sub-block types of the coding sub-blocks include a skip type and a non-skip type. In the sample adaptive compensation method according to the embodiments of the present disclosure, sample compensation processing is performed with a coding tree unit as a basic processing unit. In some embodiments, the sample adaptive compensation method sequentially traverses each coding tree unit of the current coding frame in a Z-scan order, such that the adjacent coding tree unit that has completed sample compensation and is referred to for acquiring the compensation mode information is a coding tree unit to the left or a coding tree unit above.

In S102, whether to skip the sample compensation of the coding tree unit is determined based on the coding frame type and the compensation mode information.

The coding frame type is classified into an I-frame, a P-frame, and a B-frame. In a video coding strategy, the I-frame represents a key frame, and the probability of occurrence of the I-frame is not high. However, since the I-frame is a reference frame of the P-frame and B-frame, the quality of the I-frame directly affects the quality of subsequent frames in the same group. Therefore, the I-frame is very important. To avoid the distortion of the I-frame caused by skipping the sample compensation, which would otherwise affect the entire video sequence, the sample compensation of the I-frame is not skipped in the embodiments of the present disclosure. A P-frame is a reference frame of another P-frame behind the P-frame, or is a reference frame of B-frames before and after the P-frame. In the case that the sample compensation is frequently skipped, the introduced error may be continuously propagated in the subsequent reference chain. However, a B-frame needs to be predicted with reference to an I-frame before the B-frame and a P-frame behind the B-frame, or P-frames before and after the B-frame, and therefore, the B-frame has relatively low importance, and is less likely to cause error propagation. Therefore, a relatively strict determination condition is set for the P-frame to determine whether to skip the sample compensation of the current coding tree unit, and a relatively loose determination condition is set for the B-frame to determine whether to skip the sample compensation of the current coding tree unit.

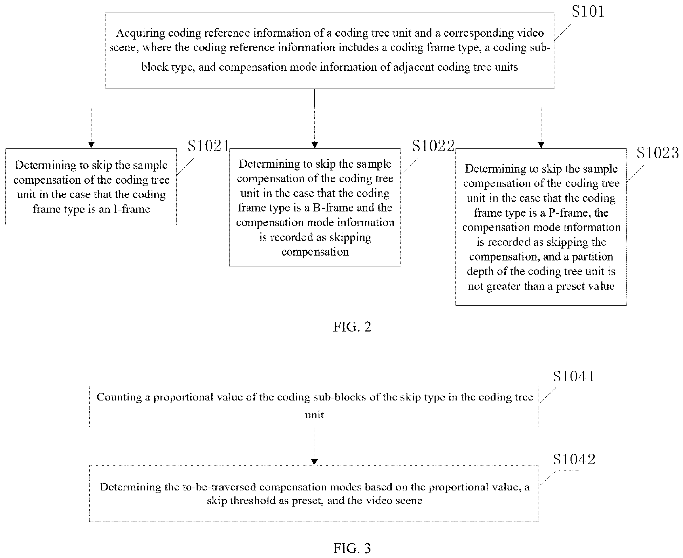

In some embodiments, FIG. 2 is a flowchart of a method for determining whether to skip sample compensation of a coding tree unit according to some embodiments of the present disclosure. As illustrated in FIG. 2, the specific implementation process is as follows.

In S1021, it is determined to skip the sample compensation of the coding tree unit in the case that the coding frame type is an I-frame.

In step S1022, it is determined to skip the sample compensation of the coding tree unit in the case that the coding frame type is a B-frame and the compensation mode information is recorded as skipping compensation.

In some embodiments, in the case that it is determined that the coding frame type is the B-frame, in combination with the traversal method following the Z-scan order, an upper coding tree unit and a left coding tree unit adjacent to the current coding tree unit are selected as reference objects, the compensation mode information of the upper coding tree unit and the left coding tree unit is read, and the sample compensation of the current coding tree unit is skipped in the case that the sample compensation of both the upper coding tree unit and the left coding tree unit is skipped.

In step S1023, it is determined to skip the sample compensation of the coding tree unit in the case that the coding frame type is a P-frame, the compensation mode information is recorded as skipping the compensation, and the partition depth of the coding tree unit is not greater than a preset value.

In some embodiments, in the case that it is determined that the coding frame type is the P-frame, in combination with the traversal method following the Z-scan order, an upper coding tree unit and a left coding tree unit adjacent to the current coding tree unit are selected as reference objects, the compensation mode information of the upper coding tree unit and the left coding tree unit is read, and the partition depth of the current coding tree unit is acquired in the case that the sample compensation of both the upper coding tree unit and the left coding tree unit is skipped, where the partition depth is the dimension specification for further partitioning the coding tree unit into coding sub-blocks. Exemplarily, in the case that the partition depth of a coding tree unit with a size of 64 × 64 is 1, the coding sub-block of 32 × 32 can be obtained; in the case that the partition depth is 2, the coding sub-block of 16 × 16 can be obtained; in the case that the partition depth is 3, the coding sub-block of 8 × 8 can be obtained. Therefore, based on the fact that the importance of the P-frame is higher than that of the B-frame, a relatively strict determination condition can be set to ensure the detailed representation of important things in the video picture. For example, for hair in the video picture, the partition depth of the coding tree unit belonging to the hair is large, and sample compensation is not skipped to preserve the detailed representation of the hair. For a wall surface in the video picture, the partition depth of the coding tree unit belonging to the wall surface does not exceed 1, and the details of the wall surface are relatively insignificant, so sample compensation may be skipped. Therefore, in some embodiments, the preset value corresponding to the partition depth is 1, and meanwhile, in the case that the partition depth is not greater than 1, it is determined to skip the sample compensation of the current coding tree unit.

Alternatively, in some embodiments, the foregoing partition depth settings are merely exemplary examples. In the embodiments of the present disclosure, other partition depth settings are further made based on the requirements of other specific scenes, which are not limited in the embodiments of the present disclosure.

As mentioned above, in combination with the coding frame type and the compensation mode information of adjacent coding tree units, the reference role of coding frames of different types in video coding is fully considered, and different determination conditions are reasonably set, such that the overall skipping of the sample compensation mode of the coding tree unit is achieved, and the sample compensation processing speed of the coding frame is effectively accelerated.

In step S103, the sample compensation of the coding tree unit is skipped in response to a determination result to skip the sample compensation.

In step S104, to-be-traversed compensation modes are determined based on the coding sub-block type and the video scene in response to a determination result not to skip the sample compensation.

Preset compensation modes in step S105 are possible compensation modes according to the sample adaptive compensation technology, and the to-be-traversed compensation modes are compensation modes obtained by deleting and simplifying the foregoing possible compensation modes in the embodiments of the present disclosure. Exemplarily, in the case that the sample compensation of the current coding tree unit is not skipped under the determination condition of step S102, the current coding tree unit corresponds to a plurality of preset compensation modes, and an optimal compensation mode is selected for compensation by traversing the plurality of preset compensation modes, such that the preset compensation modes are simplified in combination with the coding sub-block type and the video scene, thereby achieving the effect of accelerating compensation processing. Specifically, the sample adaptive compensation technology in the embodiments of the present disclosure includes an edge compensation technology and a band compensation technology. The edge compensation technology corresponds to four compensation modes: a horizontal mode, a vertical mode, a 135° directional mode, and a 45° directional mode separately. In each compensation mode, based on the size relationships between the current pixel and two adjacent pixels, pixels are further subdivided into five categories by using a one-dimensional three-pixel template, which are valley, concave corner, convex corner, peak, and other scenes, respectively. Specifically, the valley represents a notably concave scene, while the concave corner represents a unidirectionally concave scene; the two scenes require positive compensation values to achieve smooth transitions among the three pixels. Conversely, the convex corner represents a unidirectionally convex scene, and the peak represents a notably convex scene; the two scenes require negative compensation values to reduce the prominence of the current pixel. Other scenes, without distinct representative categories, do not require specific processing. Therefore, the edge compensation technology is classified into 21 categories in different compensation modes, and different categories adopt different compensation values, which requires high calculation costs to complete the calculation of all categories. In addition, the band compensation technology classifies the current pixel based on its intensity value. Taking the coding of an 8-bit format video as an example, the band compensation technology will equally partition a total of 256 pixel values from 0 to 255 into 32 bands, with each band containing 8 consecutive pixel values. The band compensation technology needs to perform statistics and mean value calculation on pixel values in a specific band at a coding end, transmit a difference between an original pixel mean value and a reconstructed pixel mean value to a decoding end, and compensate the difference into a corresponding band at the decoding end, so as to achieve the purpose of reducing pixel distortion. In the case that both the edge compensation technology and the band compensation technology are considered simultaneously, one pixel may have 53 categories of preset compensation modes, and thus sample adaptive compensation may become a speed bottleneck at the coding end.

In some embodiments, the coding sub-block type includes a skip type and a non-skip type. The more coding sub-blocks of the skip type the coding tree unit includes, the less distortion effect will be caused by simplifying the number of preset compensation modes that need to be traversed. Moreover, the preset compensation mode capable of being simplified is further selected in combination with the video scene, so as to better fit the content features of the video frame where the coding tree unit is located. In some embodiments, FIG. 3 is a flowchart of a method for determining to-be-traversed compensation modes according to some embodiments of the present disclosure. As illustrated in FIG. 3, the specific implementation process is as follows.

In S1041, a proportional value of the coding sub-blocks of the skip type in the coding tree unit is counted.

In some embodiments, with a coding sub-block with dimensions of $4 \times 4$ as a unit, the current coding tree unit is partitioned into 256 coding sub-blocks, and a cache matrix cuType is generated to correspond to the 256 coding sub-blocks. An element with a value of 1 in the cache matrix cuType represents that a corresponding coding sub-block type is the skip type, and an element with a value of 0 represents that a corresponding coding sub-block type is the non-skip type, such that a proportional value skipRatio of the coding sub-blocks of the skip type is calculated by counting element values of the cache matrix. The calculation formula is as follows:

$$skip\mathrm{Ratio} = \frac{\sum_{i=0}^{255} \mathrm{cuType}(i)}{256}$$

where i is the index of the coding sub-block with dimensions of $4 \times 4$.

In step S1042, the to-be-traversed compensation modes are determined based on the proportional value, a skip threshold as preset, and the video scene.

The skip threshold is an intermediate value obtained by partitioning the value range [0,1] of the proportional value into subintervals, and includes one or more skip thresholds. The value of the skip threshold determines the interval length of a corresponding subinterval. It can be understood that the value range of the proportional value calculated in step S1041 is [0,1], and the interval [0,1] is partitioned into different subintervals by setting a skip threshold. The number of preset compensation modes to be simplified corresponding to each subinterval is different. After determining the number of preset compensation modes to be simplified, the preset compensation mode to be simplified is selected by distinguishing different video scenes, and then the to-be-traversed compensation modes are determined from all the preset compensation modes.

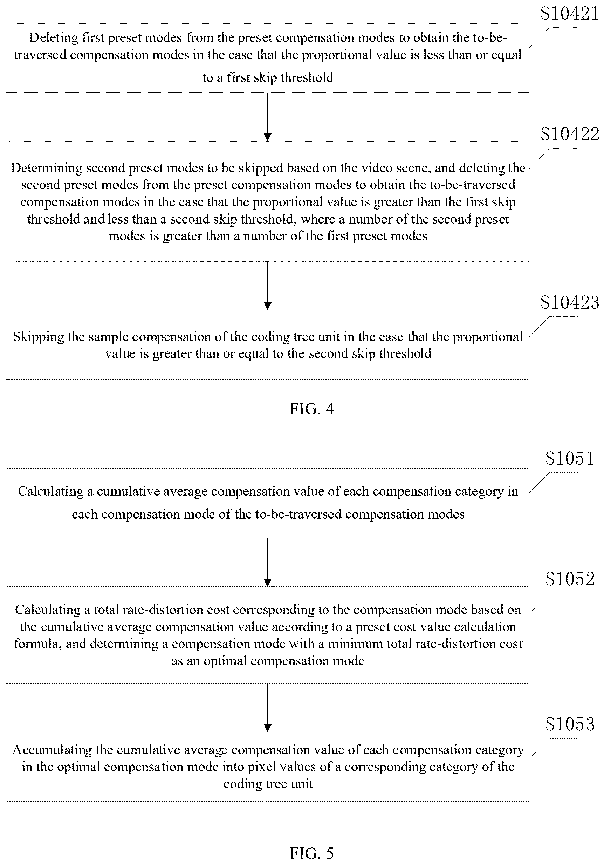

In some embodiments, the skip threshold includes a first skip threshold and a second skip threshold, where the first skip threshold is less than the second skip threshold. FIG. 4 is a flowchart of another method for determining to-be-traversed compensation modes according to some embodiments of the present disclosure. As illustrated in FIG. 4, the specific implementation process is as follows.

In S 10421, first preset modes are deleted from the preset compensation modes to obtain the to-be-traversed compensation modes in the case that the proportional value is less than or equal to the first skip threshold.

In S10422, second preset modes to be skipped are determined based on the video scene, and the second preset modes are deleted from the preset compensation modes to obtain the to-be-traversed compensation modes in the case that the proportional value is greater than the first skip threshold and less than the second skip threshold, where the number of the second preset modes is greater than the number of the first preset modes.

In S10423, the sample compensation of the coding tree unit is skipped in the case that the proportional value is greater than or equal to the second skip threshold.

Both the first preset modes and the second preset modes are compensation modes that can be simplified through calculation and determination in the preset compensation modes. The number of the first preset mode is different from the number of the second preset mode, which is set based on the specific degree of simplification. It can be understood that the sample compensation of the current coding tree unit needs to be performed in both the luminance dimension and the chrominance dimension, that is, the edge compensation mode and the band compensation mode need to be considered correspondingly in the luminance dimension, and the edge compensation mode and the band compensation mode also need to be considered correspondingly in the chrominance dimension. Therefore, both two dimensions need to be considered simultaneously for simplifying the preset compensation modes that need to be traversed. Exemplarily, in the case that the proportional value is less than or equal to the first skip threshold Th_min, that is, the proportional value is within the subinterval [0, Th_min], the coding sub-block of the skip type in the current coding tree unit occupies a small area, and a conservative level-1 mode simplification may be adopted, that is, the first preset modes are deleted to obtain the to-be-traversed compensation modes, where the first preset modes include all band compensation modes for luminance and all band compensation modes for chrominance. In the case that the proportional value is greater than the first skip threshold Th_min and less than the second skip threshold Th_max, that is, the proportional value is within the subinterval (Th_min, Th_max), the coding sub-blocks of the skip type in the current coding tree unit occupy a moderate area, and a level-2 mode simplification may be adopted, that is, the second preset modes are deleted to obtain the to-be-traversed compensation modes, where the second preset modes include all band compensation modes for luminance and all band compensation mode for chrominance; the edge compensation modes for luminance are reduced by half, and one edge compensation mode for chrominance is reduced. Taking video conference and video call scenes as examples, the picture texture is simple; a 135° directional mode and a 45° directional mode of the edge compensation mode may be selected for reduction in the luminance dimension, and a 45° directional mode of the edge compensation mode may be selected for reduction in the chrominance dimension. In the case that the proportional value is greater than or equal to the second skip threshold Th_max, that is, the proportional value is within the subinterval [Th_max, 1], the coding sub-blocks of the skip type in the current coding tree unit occupy a large area, and the sample compensation processing may be skipped.

Alternatively, in some embodiments, the foregoing reduction of the specific compensation mode is merely an example. In the embodiments of the present disclosure, reductions in number and specific modes are made based on the characteristics of other specific scenes, which are not limited in the embodiments of the present disclosure.

In some embodiments, the first skip threshold Th_min and the second skip threshold Th_max are set as empirical thresholds based on experimental data, such as the first skip threshold $Th_{min} = 0.5$ and the second skip threshold $Th_{max} = 0.75$;

In some embodiments, it is also adjusted based on the empirical thresholds of the first skip threshold and the second skip threshold in combination with details of a specific video scene. Exemplarily, in the case that the video scene is a preset detailed video scene, the first skip threshold and the second skip threshold are increased, where an increase value of the first skip threshold is greater than an increase value of the second skip threshold. Taking an outdoor live streaming scene as an example, since there are many scene details involved in the outdoor live streaming, such as flowers and grasses, the first skip threshold Th_min and the second skip threshold Th_max are selected to be increased, and the interval length of the interval (Th_min, Th_max) is reduced, so as to increase the probability of adopting the level-1 mode simplification while reducing the probability of skipping sample compensation processing, thereby ensuring better compensation precision in the case of improving the compensation processing speed. In some embodiments, in the case of the first skip threshold $Th_{min} = 0.5$ and the second skip threshold $Th_{max} = 0.75$, then the interval [0,1] is partitioned into subintervals [0,0.5], (0.5,0.75), and [0.75,1]. The first skip threshold $Th_{min}$ is adjusted to 0.6, and the second skip threshold $Th_{max}$ is adjusted to 0.8 to obtain new subintervals [0,0.6], (0.6,0.8), and [0.8,1], which is equivalent to increasing the first skip threshold $Th_{min}$ and the second skip threshold $Th_{max}$ simultaneously. In addition, the interval length of (0.6,0.8) is also less than the interval length of (0.5,0.75), so as to increase the probability of adopting the level-1 mode simplification while reducing the probability of skipping sample compensation processing.

Alternatively, in some embodiments, the settings of the skip thresholds and the adjustments of the skip thresholds based on the scene described above are merely exemplary examples. In the embodiments of the present disclosure, other settings are further made based on data statistics and other scene characteristics, which is not limited in the embodiments of the present disclosure.

In S105, sample compensation processing is performed on the coding tree unit based on the to-be-traversed compensation modes, where the number of to-be-traversed compensation modes is less than the number of preset compensation modes.

Exemplarily, FIG. 5 is a flowchart of a method for performing sample compensation processing on a coding tree unit according to some embodiments of the present disclosure. As illustrated in FIG. 5, the specific implementation process is as follows.

In S1051, a cumulative average compensation value of each compensation category in each compensation mode of the to-be-traversed compensation modes is calculated.

In some embodiments, after the to-be-traversed compensation modes are determined in step S104, a cumulative average compensation value of each compensation category in each compensation mode needs to be determined first. Taking the horizontal mode and the vertical mode in the luminance dimension that need to be traversed as an example, a horizontal one-dimensional three-pixel template is used first to classify each pixel in the current coding tree unit, determine which compensation category the pixel belongs to: valley, concave corner, convex corner, peak, or others, and calculate a compensation value of the pixel. The compensation value of each pixel is accumulated based on the compensation category to which it belongs to, so as to obtain total compensation values of the five compensation categories in the horizontal mode; then the total compensation value of each compensation category is averaged for all pixel points belonging to the compensation category to obtain an average compensation value; that is, the cumulative average compensation value of each compensation category is obtained. Then, a vertical one-dimensional three-pixel template is used to perform the same steps of traversal and accumulation to obtain cumulative average compensation values of the five compensation categories in the vertical mode.

In step S1052, a total rate-distortion cost corresponding to the compensation mode is calculated based on the cumulative average compensation value according to a preset cost value calculation formula, and a compensation mode with the minimum total rate-distortion cost is determined as the optimal compensation mode.

The rate-distortion cost represents the minimum amount of information required per source symbol on average in order to restore the output of the source with a preset distortion level. In some embodiments, the cumulative average compensation value of each compensation category is calculated in step S1051. The distortion caused by the use of each cumulative average compensation value is determined according to the preset cost value calculation formula, then the rate-distortion cost of each compensation category is determined, and finally the total rate-distortion cost corresponding to each compensation mode is determined. Exemplarily, the preset cost value calculation formula is as follows:

$$J = D + \lambda_{mode} \cdot R$$

where D represents a distortion value in the current coding mode, *R* represents a bit rate value in the current coding mode, and $\lambda_{mode}$ is a Lagrange multiplier. The total rate-distortion costs of the five categories in the horizontal mode and the total rate-distortion costs of the five categories in the vertical mode are determined in combination with an empirical value and an estimated value of entropy coding. The total rate-distortion costs of different modes are compared, and a mode with the minimum cost serves as the optimal compensation mode.

In step S1053, the cumulative average compensation value of each compensation category in the optimal compensation mode is accumulated into pixel values of a corresponding category of the coding tree unit.

In some embodiments, after the sample compensation of the current coding tree unit is completed, the optimal supplemental mode corresponding to luminance and chrominance for the current coding tree unit is cached for use in acquiring the field information of the next coding tree unit.

It can be seen from the above that the coding reference information of a coding tree unit and a corresponding video scene are acquired, and then whether to skip the sample compensation of the coding tree unit is determined based on a coding frame type and compensation mode information in the coding reference information; or in response to skipping the sample compensation, the sample compensation of the coding tree unit is skipped; or in response to not skipping the sample compensation, to-be-traversed compensation modes are determined based on the coding sub-block type in the coding reference information and the video scene; finally, sample compensation is performed on the coding tree unit based on the to-be-traversed compensation modes, where the number of to-be-traversed compensation modes is less than the number of the preset compensation modes. With the above technical means, the importance of the current coding tree unit is known based on the coding frame type, and the necessity of compensation for the current coding tree unit is obtained based on the compensation mode information through the compensation situation of adjacent coding tree units, so as to preliminarily determine whether the compensation is skipped and achieve a preliminary acceleration effect. In the case that the compensation is not skipped, the compensation mode is further simplified based on the coding sub-block type and the video scene from the perspectives of the internal coding information of the coding tree unit and the content features of the coding frame; on the premise of slightly compromising the compensation precision, the calculation overhead is saved, and the compensation processing speed is efficiently improved.

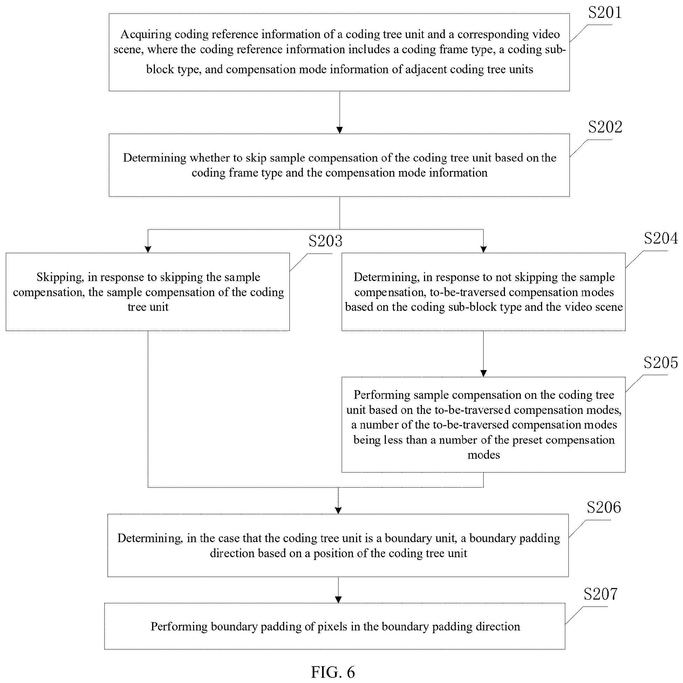

FIG. 6 is a flowchart of another sample adaptive compensation method according to some embodiments of the present disclosure, which provides a process of performing boundary padding on the current coding frame after sample compensation processing. As illustrated in FIG. 6, the method includes the following steps.

In S201, the coding reference information of a coding tree unit and a corresponding video scene are acquired, where the coding reference information includes a coding frame type, a coding sub-block type, and the compensation mode information of adjacent coding tree units.

In S202, whether to skip the sample compensation of the coding tree unit is determined based on the coding frame type and the compensation mode information.

In S203, the sample compensation of the coding tree unit is skipped in response to a determination result to skip the sample compensation.

In S204, a to-be-traversed compensation mode is determined based on the coding sub-block type and the video scene in response to a determination result not to skip the sample compensation.

In S205, sample compensation processing is performed on the coding tree unit based on the to-be-traversed compensation modes, where the number of to-be-traversed compensation modes is less than the number of preset compensation modes.

In S206, a boundary padding direction is determined based on the position of the coding tree unit in the case that the coding tree unit is a boundary unit.

In S207, the boundary padding of pixels is performed in the boundary padding direction.

In some embodiments, in the case that the current coding tree unit is the first unit in the current unit row, after the sample compensation is completed, the updated pixel values need to be padded to the left boundary, and in the case that the current coding tree unit is the last unit in the current unit row, the updated pixel values need to be padded to the right boundary. Therefore, it is ensured that in the case that the motion vector points to a region outside the current coding frame, a correct reference pixel value is still obtained, thereby avoiding coding errors. In addition, the above boundary padding process is not only applicable to the sample adaptive compensation method according to the embodiments of the present disclosure, but also applicable to the sample adaptive compensation method according to any one of the embodiments of the present disclosure.

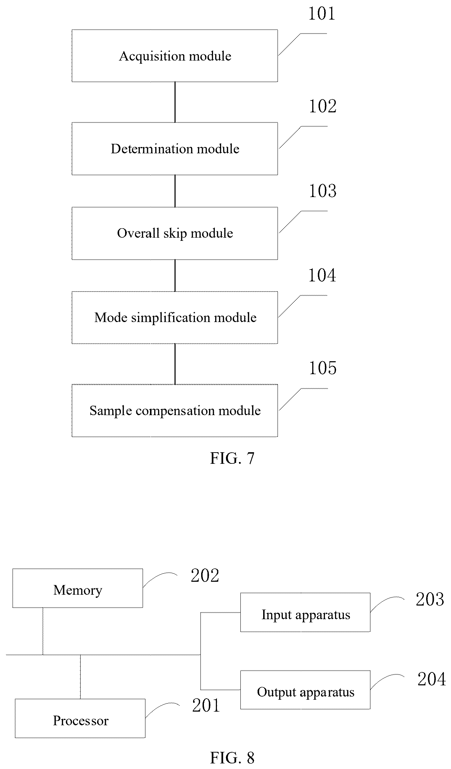

FIG. 7 is a structural block diagram of a sample adaptive compensation apparatus according to some embodiments of the present disclosure. The apparatus is configured to perform the sample adaptive compensation method according to the above embodiments, and is provided with corresponding functional modules and has beneficial effects for performing the method. As illustrated in FIG. 7, the apparatus specifically includes an acquisition module 101, a determination module 102, an overall skip module 103, a mode simplification module 104, and a sample compensation module 105.

The acquisition module 101 is configured to acquire coding reference information of a coding tree unit and a video scene corresponding to the coding tree unit, wherein the coding reference information includes a coding frame type, a coding sub-block type, and compensation mode information of adjacent coding tree units.

The determination module 102 is configured to determine whether to skip sample compensation of the coding tree unit based on the coding frame type and the compensation mode information.

The overall skip module 103 is configured to skip, in response to skipping the sample compensation, the sample compensation of the coding tree unit.

The mode simplification module 104 is configured to determine, in response to not skipping the sample compensation, to-be-traversed compensation modes based on the coding sub-block type and the video scene; and

The sample compensation module 105 is configured to perform the sample compensation on the coding tree unit based on the to-be-traversed compensation modes, the number of the to-be-traversed compensation modes being less than the number of the preset compensation modes.

It can be seen from the above that the coding reference information of a coding tree unit and a corresponding video scene are acquired, and then whether to skip the sample compensation of the coding tree unit is determined based on a coding frame type and compensation mode information in the coding reference information; or in response to skipping the sample compensation, the sample compensation of the coding tree unit is skipped; or in response to not skipping the sample compensation, to-be-traversed compensation modes are determined based on the coding sub-block type in the coding reference information and the video scene; finally, sample compensation is performed on the coding tree unit based on the to-be-traversed compensation modes, where the number of to-be-traversed compensation modes is less than the number of the preset compensation modes. With the above technical means, the importance of the current coding tree unit is known based on the coding frame type, and the necessity of compensation for the current coding tree unit is obtained based on the compensation mode information through the compensation situation of adjacent coding tree units, so as to preliminarily determine whether the compensation is skipped and achieve a preliminary acceleration effect. In the case that the compensation is not skipped, the compensation mode is further simplified based on the coding sub-block type and the video scene from the perspectives of the internal coding information of the coding tree unit and the content features of the coding frame; on the premise of slightly compromising the compensation precision, the calculation overhead is saved, and the compensation processing speed is efficiently improved.

In some embodiments, the determination module 102 is specifically configured to:

determine to skip the sample compensation of the coding tree unit in the case that the coding frame type is an I-frame;
determine to skip the sample compensation of the coding tree unit in the case that the coding frame type is a B-frame and the compensation mode information is recorded as skipping compensation; and
determine to skip the sample compensation of the coding tree unit in the case that the coding frame type is a P-frame, the compensation mode information is recorded as skipping the compensation, and a partition depth of the coding tree unit is not greater than a preset value.

In some embodiments, the coding tree unit is partitioned into a plurality of coding sub-blocks in advance, each coding sub-block corresponds to one coding sub-block type, and the coding sub-block type includes a skip type and a non-skip type. The mode simplification module 104 is specifically configured to:

count a proportional value of the coding sub-blocks of the skip type in the coding tree unit; and

determine the to-be-traversed compensation modes based on the proportional value, a skip threshold as preset, and the video scene.

In some embodiments, the skip threshold includes a first skip threshold and a second skip threshold, where the first skip threshold is less than the second skip threshold. The mode simplification module 104 is specifically configured to:

delete first preset modes from the preset compensation modes to obtain the to-be-traversed compensation modes in the case that the proportional value is less than or equal to the first skip threshold;
determine second preset modes to be skipped based on the video scene, and delete the second preset modes from the preset compensation modes to obtain the to-be-traversed compensation modes in the case that the proportional value is greater than the first skip threshold and less than the second skip threshold, where the number of the second preset modes is greater than the number of the first preset modes; and
skip the sample compensation of the coding tree unit in the case that the proportional value is greater than or equal to the second skip threshold.

In some embodiments, the mode simplification module 104 is further configured to:
increase the first skip threshold and the second skip threshold in the case that the video scene is a preset detailed video scene, where an increase value of the first skip threshold is greater than an increase value of the second skip threshold.

In some embodiments, the sample compensation module 105 is specifically configured to:

calculate a cumulative average compensation value of each compensation category in each compensation mode of the to-be-traversed compensation modes;
calculate a total rate-distortion cost corresponding to the compensation mode based on the cumulative average compensation value according to a preset cost value calculation formula, and determine a compensation mode with the minimum total rate-distortion cost as the optimal compensation mode; and
accumulate the cumulative average compensation value of each compensation category in the optimal compensation mode into pixel values of a corresponding category in the coding tree unit.

In some embodiments, the apparatus further includes a boundary padding module 106. The boundary padding module 106 is configured to:

determine, in the case that the coding tree unit is a boundary unit, a boundary padding direction based on the position of the coding tree unit; and

perform the boundary padding of pixels in the boundary padding direction.

FIG. 8 is a schematic structural diagram of a sample adaptive compensation device according to some embodiments of the present disclosure. As illustrated in FIG. 8, the device includes a processor 201, a memory 202, an input apparatus 203, and an output apparatus 204. The number of processors 201 in the device may be one or more, and by way of example, one processor 201 is illustrated in FIG. 8. The processor 201, the memory 202, the input apparatus 203, and the output apparatus 204 in the device are connected by a bus or other means, and by way of example, they are connected by a bus in FIG. 8. The memory 202, as a computer-readable storage medium, is configured to store one or more software programs, one or more computer executable programs, and one or more modules, such as program instructions/modules corresponding to the sample adaptive compensation method in the embodiments of the present disclosure. By running one or more software programs, one or more instructions, and one or more modules stored in the memory 202, the processor 201 runs various functional applications and data processing of the device, such that the sample adaptive compensation method described above is performed. The input apparatus 203 is configured to receive input numeric or character information and produce key signal inputs related to user settings and function control of the device. The output apparatus 204 includes display devices such as a display screen.

The embodiments of the present disclosure further provide a non-transitory storage medium including one or more computer-executable instructions. The one or more computer-executable instructions, when executed by a computer processor, cause the computer processor to perform the sample adaptive compensation method according to the above embodiments. The method includes:

acquiring coding reference information of a coding tree unit and a video scene corresponding to the coding tree unit, wherein the coding reference information includes a coding frame type, a coding sub-block type, and compensation mode information of adjacent coding tree units;

determining whether to skip sample compensation of the coding tree unit based on the coding frame type and the compensation mode information;

skipping, in response to skipping the sample compensation, the sample compensation of the coding tree unit;

determining, in response to not skipping the sample compensation, to-be-traversed compensation modes based on the coding sub-block type and the video scene; and

performing the sample compensation on the coding tree unit based on the to-be-traversed compensation modes, a number of the to-be-traversed compensation modes being less than a number of preset compensation modes.

It is to be noted that in the embodiments of the above sample adaptive compensation apparatus, the various units and modules included are only divided based on functional logic, but are not limited to the above division as long as corresponding functions can be achieved. In addition, the specific names of the functional units are used merely for easy differentiation and do not limit the protection scope of the embodiments of the present disclosure.

In some embodiments, various aspects of the method provided in the present disclosure are also implemented in the form of a program product, which includes one or more program codes. When the program product is run on a computer device, the one or more program codes are configured to cause the computer device to perform the steps in the methods according to the various exemplary embodiments of the present disclosure described above in the specification; for example, the computer device performs the sample adaptive compensation method described in the embodiments of the present disclosure. The program product may be implemented by adopting any combination of one or more readable media.

## Claims

1. A sample adaptive compensation method, comprising:

acquiring coding reference information of a coding tree unit and a video scene corresponding to the coding tree unit, wherein the coding reference information comprises a coding frame type, a coding sub-block type, and compensation mode information of adjacent coding tree units;

determining whether to skip sample compensation of the coding tree unit based on the coding frame type and the compensation mode information;

skipping, in response to skipping the sample compensation, the sample compensation of the coding tree unit;

determining, in response to not skipping the sample compensation, to-be-traversed compensation modes based on the coding sub-block type and the video scene; and

performing the sample compensation on the coding tree unit based on the to-be-traversed compensation modes, a number of the to-be-traversed compensation modes being less than a number of preset compensation modes.

2. The sample adaptive compensation method according to claim 1, wherein determining whether to skip the sample compensation of the coding tree unit based on the coding frame type and the compensation mode information, comprises:

determining to skip the sample compensation of the coding tree unit in a case that the coding frame type is an I-frame;
determining to skip the sample compensation of the coding tree unit in a case that the coding frame type is a B-frame and the compensation mode information is recorded as skipping compensation; and
determining to skip the sample compensation of the coding tree unit in a case that the coding frame type is a P-frame, the compensation mode information is recorded as skipping the compensation, and a partition depth of the coding tree unit is not greater than a preset value.

3. The sample adaptive compensation method according to claim 1, wherein the coding tree unit is partitioned into a plurality of coding sub-blocks in advance, each coding sub-block corresponds to one coding sub-block type, and the coding sub-block type comprises a skip type and a non-skip type; and determining the to-be-traversed compensation modes based on the coding sub-block type and the video scene, comprises:

counting a proportional value of the coding sub-blocks of the skip type in the coding tree unit; and
determining the to-be-traversed compensation modes based on the proportional value, a skip threshold as preset, and the video scene.

4. The sample adaptive compensation method according to claim 3, wherein the skip threshold comprises a first skip threshold and a second skip threshold, the first skip threshold being less than the second skip threshold; and determining the to-be-traversed compensation modes based on the proportional value, the skip threshold as preset, and the video scene, comprises:

deleting first preset modes from the preset compensation modes to obtain the to-be-traversed compensation modes in a case that the proportional value is less than or equal to the first skip threshold;
determining second preset modes to be skipped based on the video scene, and deleting the second preset modes from the preset compensation modes to obtain the to-be-traversed compensation modes in a case that the proportional value is greater than the first skip threshold and less than the second skip threshold, wherein a number of the second preset modes is greater than a number of the first preset modes; and skipping the sample compensation of the coding tree unit in a case that the proportional value is greater than or equal to the second skip threshold.

5. The sample adaptive compensation method according to claim 4, further comprising:
increasing the first skip threshold and the second skip threshold in a case that the video scene is a preset detailed video scene, wherein an increase value of the first skip threshold is greater than an increase value of the second skip threshold.

6. The sample adaptive compensation method according to any one of claims 1 to 5, wherein performing the sample compensation processing on the coding tree unit based on the to-be-traversed compensation modes, comprises:

calculating a cumulative average compensation value of each compensation category in each compensation mode of the to-be-traversed compensation modes;
calculating a total rate-distortion cost corresponding to the compensation mode based on the cumulative average compensation value according to a preset cost value calculation formula, and determining a compensation mode with a minimum total rate-distortion cost as an optimal compensation mode; and
accumulating the cumulative average compensation value of each compensation category in the optimal compensation mode into pixel values of a corresponding category in the coding tree unit.

7. The sample adaptive compensation method according to any one of claims 1 to 6, wherein after performing the sample compensation on the coding tree unit based on the to-be-traversed compensation modes, the method further comprises:

determining, in a case that the coding tree unit is a boundary unit, a boundary padding direction based on a position of the coding tree unit; and
performing boundary padding of pixels in the boundary padding direction.

8. A sample adaptive compensation apparatus, comprising:

an acquisition module, configured to acquire coding reference information of a coding tree unit and a video scene corresponding to the coding tree unit, wherein the coding reference information comprises a coding frame type, a coding sub-block type, and compensation mode information of adjacent coding tree units;

a determination module, configured to determine whether to skip sample compensation of the coding tree unit based on the coding frame type and the compensation mode information;

an overall skip module, configured to skip, in response to skipping the sample compensation, the sample compensation of the coding tree unit;

a mode simplification module, configured to determine, in response to not skipping the sample compensation, to-be-traversed compensation modes based on the coding sub-block type and the video scene; and

a sample compensation module, configured to perform the sample compensation on the coding tree unit based on the to-be-traversed compensation modes, a number of the to-be-traversed compensation modes being less than a number of preset compensation modes.

9. A sample adaptive compensation device, comprising: one or more processors; and a storage apparatus configured to store one or more programs, wherein the one or more programs, when run by the one or more processors, cause the one or more processors to perform the sample adaptive compensation method as defined in any one of claims 1 to 7.

10. A non-transitory storage medium storing one or more computer-executable instructions, wherein the one or more computer-executable instructions, when executed by a computer processor, cause the computer processor to perform the sample adaptive compensation method as defined in any one of claims 1 to 7.

11. A computer program product, comprising one or more computer programs, wherein the one or more computer programs, when run by a processor, cause the processor to perform the sample adaptive compensation method as defined in any one of claims 1 to 7.

S101

Acquiring coding reference information of a coding tree unit and a corresponding video scene, where the coding reference information includes a coding frame type, a coding sub-block type, and compensation mode information of adjacent coding tree units

S102

Determining whether to skip sample compensation of the coding tree unit based on the coding frame type and the compensation mode information

S103

Skipping, in response to skipping the sample compensation, the sample compensation of the coding tree unit

S104

Determining, in response to not skipping the sample compensation, to-be-traversed compensation modes based on the coding sub-block type and the video scene

S105

Performing the sample compensation on the coding tree unit based on the to-be-traversed compensation modes, a number of the to-be-traversed compensation modes being less than a number of preset compensation modes

FIG. 1

FIG. 2

FIG. 3

S10421

Deleting first preset modes from the preset compensation modes to obtain the to-be-traversed compensation modes in the case that the proportional value is less than or equal to a first skip threshold

S10422

Determining second preset modes to be skipped based on the video scene, and deleting the second preset modes from the preset compensation modes to obtain the to-be-traversed compensation modes in the case that the proportional value is greater than the first skip threshold and less than a second skip threshold, where a number of the second preset modes is greater than a number of the first preset modes

S10423

Skipping the sample compensation of the coding tree unit in the case that the proportional value is greater than or equal to the second skip threshold

FIG. 4

S1051

Calculating a cumulative average compensation value of each compensation category in each compensation mode of the to-be-traversed compensation modes

S1052

Calculating a total rate-distortion cost corresponding to the compensation mode based on the cumulative average compensation value according to a preset cost value calculation formula, and determining a compensation mode with a minimum total rate-distortion cost as an optimal compensation mode

S1053

Accumulating the cumulative average compensation value of each compensation category in the optimal compensation mode into pixel values of a corresponding category of the coding tree unit

FIG. 5

S201

Acquiring coding reference information of a coding tree unit and a corresponding video scene, where the coding reference information includes a coding frame type, a coding sub-block type, and compensation mode information of adjacent coding tree units

S202

Determining whether to skip sample compensation of the coding tree unit based on the coding frame type and the compensation mode information

S203

Skipping, in response to skipping the sample compensation, the sample compensation of the coding tree unit

S204

Determining, in response to not skipping the sample compensation, to-be-traversed compensation modes based on the coding sub-block type and the video scene

S205

Performing sample compensation on the coding tree unit based on the to-be-traversed compensation modes, a number of the to-be-traversed compensation modes being less than a number of the preset compensation modes

S206

Determining, in the case that the coding tree unit is a boundary unit, a boundary padding direction based on a position of the coding tree unit

S207

Performing boundary padding of pixels in the boundary padding direction

FIG. 6

EP 4 679 833 A1

FIG. 7

FIG. 8

18

## INTERNATIONAL SEARCH REPORT

| International application No. |
|---|
| **PCT/CN2024/084562** |

**A. CLASSIFICATION OF SUBJECT MATTER**

H04N19/96(2014.01)i; H04N19/176(2014.01)i; H04N19/147(2014.01)i

According to International Patent Classification (IPC) or to both national classification and IPC

**B. FIELDS SEARCHED**

Minimum documentation searched (classification system followed by classification symbols)

IPC:H04N19/-

Documentation searched other than minimum documentation to the extent that such documents are included in the fields searched

Electronic data base consulted during the international search (name of data base and, where practicable, search terms used)

CNTXT: ENTXTC; CNKI: "B"帧, "I"帧, "P"帧, 编码树, 补偿, 参考, 策略, 关键, 类型, 临近, 模式, 启用, 上, 使能, 使用, 跳过, 相邻, 样点自适应, 样点自适应补偿, 应用, 帧, 执行, 周围, 比例, 占比, 百分比, 左, 数量, 数目, 简化, 减少, 减, 去除; VEN; ENTXT; IEEE; JVET: around, frame, CTU, left, merge, SAO, surround, up, adjacent+, skip+, us+, sample adjust offset, carry out, dering+, execut+, implem+, appl+, number, sum.

**C. DOCUMENTS CONSIDERED TO BE RELEVANT**

| Category* | Citation of document, with indication, where appropriate, of the relevant passages | Relevant to claim No. |
|---|---|---|
| PX | CN 116527944 A (BAIGUOYUAN TECHNOLOGY (SINGAPORE) PTE LTD.) 01 August 2023 (2023-08-01) claims 1-11 | 1-11 |
| Y | CN 108259903 A (CHONGQING UNIVERSITY OF POSTS AND TELECOMMUNICATIONS) 06 July 2018 (2018-07-06) description, paragraphs 0026-0063, and figures 1-6 | 1, 6-11 |
| Y | CN 109462757 A (SHANGHAI JIAO TONG UNIVERSITY) 12 March 2019 (2019-03-12) description, paragraphs 0036-0058, and figures 1-3 | 1, 6-11 |
| A | CN 107707915 A (SHANGHAI ZHAOXIN INTEGRATION CIRCUIT CO., LTD.) 16 February 2018 (2018-02-16) entire document | 1-11 |
| A | CN 107343199 A (WUHAN UNIVERSITY) 10 November 2017 (2017-11-10) entire document | 1-11 |

☑ Further documents are listed in the continuation of Box C.　　☑ See patent family annex.

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
|---|---|
| **18 June 2024** | **21 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/084562**

**C. DOCUMENTS CONSIDERED TO BE RELEVANT**

| Category* | Citation of document, with indication, where appropriate, of the relevant passages | Relevant to claim No. |
|---|---|---|
| A | US 2013266058 A1 (GEN INSTRUMENT CORP.) 10 October 2013 (2013-10-10)<br>entire document | 1-11 |

Form PCT/ISA/210 (second sheet) (July 2022)

**INTERNATIONAL SEARCH REPORT**
Information on patent family members

| International application No. |
| --- |
| **PCT/CN2024/084562** |

| Patent document cited in search report | | | Publication date (day/month/year) | Patent family member(s) | | | Publication date (day/month/year) |
| --- | --- | --- | --- | --- | --- | --- | --- |
| CN | 116527944 | A | 01 August 2023 | None | | | |
| CN | 108259903 | A | 06 July 2018 | CN | 108259903 | B | 14 May 2021 |
| CN | 109462757 | A | 12 March 2019 | None | | | |
| CN | 107707915 | A | 16 February 2018 | US | 2019104307 | A1 | 04 April 2019 |
| | | | | US | 10271049 | B1 | 23 April 2019 |
| | | | | CN | 107707915 | B | 12 November 2019 |
| CN | 107343199 | A | 10 November 2017 | CN | 107343199 | B | 24 April 2020 |
| US | 2013266058 | A1 | 10 October 2013 | WO | 2013152356 | A1 | 10 October 2013 |
| | | | | US | 2017118478 | A1 | 27 April 2017 |
| | | | | US | 9872034 | B2 | 16 January 2018 |
| | | | | US | 9549176 | B2 | 17 January 2017 |

Form PCT/ISA/210 (patent family annex) (July 2022)

**EP 4 679 833 A1**

**Patent documents cited in the description**

- CN 202310382784